Europäisches Patentamt

**European Patent Office**

Office européen des brevets

(19)

(11) Veröffentlichungsnummer: **0 024 052**
**B1**

(12) ## EUROPÄISCHE PATENTSCHRIFT

(45) Veröffentlichungstag der Patentschrift:
09.02.83

(51) Int. Cl.³: **B 62 D 27/06, E 05 C 3/04**

(21) Anmeldenummer: 80104766.3

(22) Anmeldetag: 12.08.80

(54) **Verschluss für abklappbare und auspendelbare Bordwände von Lastfahrzeugen.**

(30) Priorität: 13.08.79 DE 2932763

(43) Veröffentlichungstag der Anmeldung:
18.02.81 Patentblatt 81/7

(45) Bekanntmachung des Hinweises auf die Patenterteilung:
09.02.83 Patentblatt 83/6

(84) Benannte Vertragsstaaten:
AT BE CH FR GB IT LI NL SE

(56) Entgegenhaltungen:
**DE-A-2 635 907**
**DE-B-2 204 112**

(73) Patentinhaber: **F. HESTERBERG & SÖHNE GmbH & Co. KG, Heilenbecker Strasse 50-60, D-5828 Ennepetal 1 (DE)**

(72) Erfinder: **Sickel, Hans Werner, Kinzigstrasse 2, D-5800 Hagen (DE)**

(74) Vertreter: **Kneissl, Richard, Dr., Widenmayerstrasse 46, D-8000 München 22 (DE)**

BUNDESDRUCKEREI BERLIN

## Verschluß für abklappbare und auspendelbare Bordwände von Lastfahrzeugen

### Beschreibung

Die Erfindung betrifft einen Verschluß für abklappbare und auspendelbare Bordwände von Lastfahrzeugen zum Anbringen an einem festen Aufbauteil mit einem Fangmaul und einer Schließschwinge, die durch einen Handhebel zu einer den Kopf eines Pendelzapfens hintergreifenden geschlossenen Öse schließbar sind, die an beiden Stirnseiten durch Anschrägungen am Fangmaul und an der Schließschwinge eine konische Absenkung aufweist, wobei zwischen den Anschrägungen ein Steg verbleibt.

Bei einem Verschluß dieser Art (siehe z. B. DE-B-2 204 112) dient das Anschrägen des Fangmauls und der Schließschwinge dazu, einem solchen Verschluß ein gewisses Heranholvermögen in Richtung des Pendelzapfens zu geben. Bei Lastfahrzeugen kommt es nämlich immer wieder vor, daß die Bordwand durch das Ladegut durchgebogen wird, so daß beim Schließen der Kopf des Pendelzapfens vor dem Fangmaul zu liegen kommt. In dieser Stellung kann natürlich der Pendelzapfen nicht in das Fangmaul hineingedrückt werden. Wenn aber das Fangmaul und die Schließschwinge in der oben beschriebenen Weise angeschrägt sind, so läuft der Kopf beim Schließen des Fangmauls die Anschrägung hinauf, wodurch eine gewisse Horizontalbewegung des Pendelzapfens zustande kommt.

Es hat sich aber gezeigt, daß das Heranholvermögen in Erstreckungsrichtung des Pendelzapfens bei Verschlüssen der eingangs bezeichneten Art immer noch nicht ausreicht, wenn die Bordwand stärker durchgebogen ist.

Der Erfindung lag die Aufgabe zugrunde, einen Verschluß der eingangs bezeichneten Art so weiterzubilden, daß er ein erhöhtes Heranholvermögen in Erstreckungsrichtung des Pendelzapfens aufweist.

Die Aufgabe wird erfindungsgemäß dadurch gelöst, daß der Steg an der Schließschwinge schmaler als der Steg am Fangmaul ist, wodurch beim Schließen der Schließschwinge die Anschrägung der Schließschwinge zuerst den Kopf des Pendelzapfens hintergreift und auf diesen einen Schub ausübt, bis der Kopf auf der Anschrägung des Fangmauls aufgleitet.

Durch diese Ausbildung wird das horizontale Heranholvermögen in Erstreckungsrichtung des Pendelzapfens noch beträchtlich erhöht. Wenn beispielsweise die Bordwand so verbogen ist, daß beim Schließen derselben der Kopf des Pendelzapfens die Anschrägung am Fangmaul noch nicht erreicht, so kann die Anschrägung auf der Schließschwinge den Kopf bereits hintergreifen und ihm somit einen Schub erteilen, wobei der Pendelzapfen soweit verschoben wird, daß sein Kopf die Anschrägung am Fangmaul erreicht und beim völligen Schließen der Schließschwinge auf die Anschrägung auflaufen kann.

Zur weiteren Verbesserung des Heranholvermögens wird es bevorzugt, an der Öffnungsseite des Fangmauls die Anschrägungen aufeinander zulaufen zu lassen, so daß Anspitzungen gebildet werden. Durch diese Maßnahme kann das Heranholvermögen noch zusätzlich verbessert werden, da der Kopf des Pendelzapfens beim Schließen der Schließschwinge zunächst diese Anspitzungen hinaufgleitet.

Eine Ausführungsform eines erfindungsgemäßen Verschlusses wird nun an Hand der beigefügten Zeichnungen näher erläutert. In den Zeichnungen zeigt

Fig. 1 einen erfindungsgemäßen Verschluß im geschlossenen Zustand;

Fig. 2 eine schematische Darstellung des Vorgangs beim Schließen des Verschlusses, wenn der Pendelzapfen aufgrund einer Durchbiegung der Bordwand nicht die richtige Lage aufweist; und

Fig. 3 einen Schnitt an der III-III des Verschlusses von Fig. 1.

Der erfindungsgemäße Verschluß weist als hauptsächliche Bauteile ein Fangmaulteil 1, eine Schließschwinge 2 und einen Handhebel 3 auf. Das Fangmaulteil 1 ist an seiner Oberseite massiv und an seiner Unterseite U-förmig ausgebildet. Es besitzt an seiner Oberseite ein Fangmaul 1a. Die Schließschwinge 2 reicht mit einem Fortsatz in die U-förmige Ausnehmung des Fangmaulteils 1 und ist dort mittels einer Achse 4 drehbar gelagert. Ein weiterer Fortsatz der Schließschwinge 2 reicht in den ebenfalls U-förmig ausgebildeten Handhebel und ist an diesen mittels einer Achse 5 befestigt. In der U-förmigen Ausnehmung des Fangmaulteils 1 wie auch in der U-förmigen Ausnehmung des Handhebels 3 ist eine Verbindungsstange 6 angeordnet, die mit einem Ende über eine Achse 7 am Handhebel und mit dem anderen Ende über eine Achse 8 am Fangmaulteil angelenkt ist. Durch Schwenken des Handhebels 3 kann die Schließschwinge aus- und eingeschwenkt werden, wie ohne weiteres einzusehen ist.

Das Fangmaul 1a besitzt zu beiden Seiten eine Anschrägung 9, während die Schließschwinge eine entsprechende Anschrägung 10 aufweist. Die Anschrägungen sind aber so ausgebildet, daß sich am Fangmaul 1a ein Steg 11 ergibt, der breiter ist als ein entsprechender Steg 12 an der Schließschwinge 2.

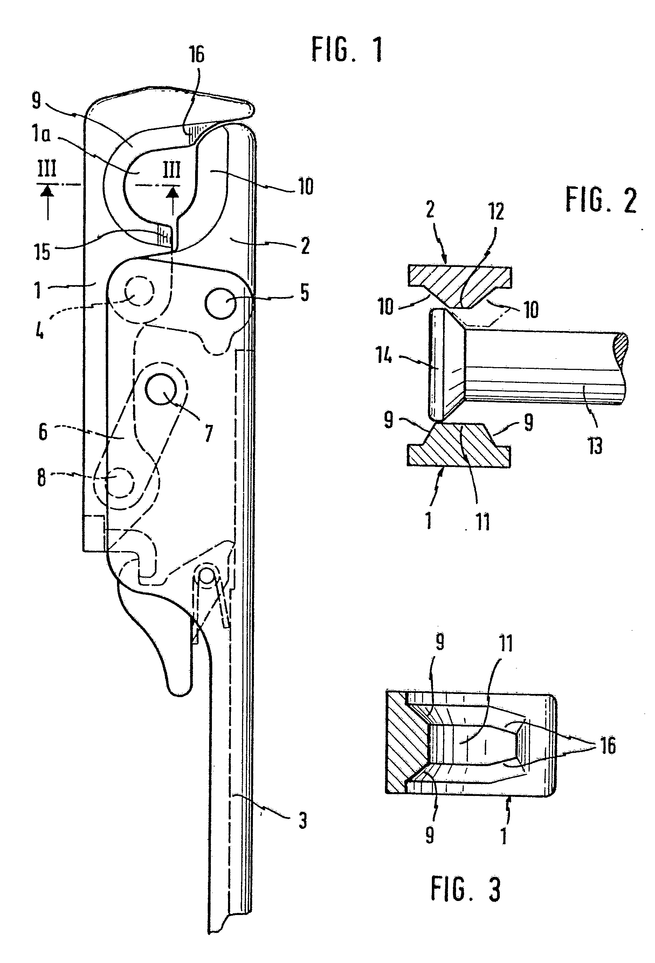

Wie das erhöhte Heranholvermögen beim erfindungsgemäßen Verschluß zustandekommt, ist aus der schematischen Darstellung von Fig. 2 ersichtlich. Ein Pendelzapfen 13 liegt mit seinem Kopf 14 auf dem Steg 11 des Fangmauls 1a an. Da jedoch der Steg 12 an der Schließschwinge 2 schmaler gestaltet ist, ist die Schließschwinge bereits in dieser Stellung in der Lage, den Kopf 14 des Pendelzapfens 13 zu hintergreifen. Beim Schließen der Schließschwinge 2 kommt es daher zu einem seitlichen Schub auf den Kopf 14, bis dieser auf die Anschrägung 9 aufgleitet. Beim weiteren Schließen der Schließschwinge wird der Pendelzapfen noch weiter seitlich verschoben, bis er bei ganz geschlossener Stellung der Schließschwinge die vorgesehene Lage aufweist.

Das Fangmaul 1a ist an der Öffnungsseite so ausgebildet, daß die beidseitigen Anschrägungen 9 aufeinander zulaufen, so daß Anspitzungen 15, 16 gebildet werden. Hierdurch werden zusätzliche Aufgleitflächen für den Kopf 14 des Pendelzapfens 13 gebildet.

## Patentansprüche

1. Verschluß für abklappbare und auspendelbare Bordwände von Lastfahrzeugen zum Anbringen an einem festen Aufbauteil mit einem Fangmaul (1a) und einer Schließschwinge (2), die durch einen Handhebel (3) zu einer den Kopf (14) eines Pendelzapfens (13) hintergreifenden geschlossenen Öse schließbar sind, die an beiden Stirnseiten durch Anschrägungen (9, 10) am Fangmaul (1a) und an der Schließschwinge (2) eine konische Absenkung aufweist, wobei zwischen den Anschrägungen (9, 10) ein Steg (11, 12) verbleibt, dadurch gekennzeichnet, daß der Steg (12) an der Schließschwinge (2) schmaler als der Steg (11) am Fangmaul (1a) ist, wodurch beim Schließen der Schließschwinge (2) die Anschrägung (10) der Schließschwinge (2) zuerst den Kopf (14) des Pendelzapfens (13) hintergreift und auf diesen einen Schub ausübt, bis der Kopf (14) auf der Anschrägung (9) des Fangmauls (1a) aufgleitet.

2. Verschluß nach Anspruch 1, dadurch gekennzeichnet, daß an der Öffnungsseite des Fangmauls (1a) die Anschrägungen (9) aufeinander zulaufen, so daß Anspitzungen (15, 16) gebildet werden.

## Claims

1. Closure for the side of a truck which can be hinged down and swung out, for attachment to a fixed superstructure, with a jaw (1a) and a pivoted rocker (2) which can be closed by a lever (3) to form therewith a clasp extending round the back of the head (14) of a movable pin (13), the clasp being provided with a conical depression at both sides by means of angled portions (9, 10) on the jaw (1a) and on the rocker (2) respectively, a ridge (11, 12) being left between the angled portions (9, 10), characterised by the ridge (12) on the pivoted rocker (2) being narrower than the ridge (11) on the jaw (1a) so that when the rocker (2) is being closed the angled portion (10) of the rocker (2) first engages the back of the head (14) of the pin (13) and exerts a force thereon until the head (14) slides onto the angled portion (9) of the jaw (1a).

2. Closure in accordance with Claim 1, characterised by the opening side of the jaw (1a) having thereon angled portions (9) which approach each other in such a way as to form points (15, 16).

## Revendications

1. Fermeture pour ranchers rabattables et oscillants de véhicules de transport, destinée à être montée sur une pièce fixe de la carrosserie, composée d'une mâchoire d'arrêt (1a) et d'une coulisse de fermeture (2) qui se ferment au moyen d'un levier manuel (3) en formant un oeil appréhendant à l'arrière la tête (14) d'un tourillon oscillant (13) qui présente des deux côtés frontaux un évidement crée par des chanfreins (9, 10) de la mâchoire d'arrêt (1a) et de la coulisse de fermeture (2) en même temps qu'une nervure (11, 12) règne entre les chanfreins (9, 10), caractérisée par le fait que nervure (12) sur la coulisse de fermeture (2) est plus étroite que la nervure (11) sur la mâchoire d'arrêt (1a) et qu'ainsi en fermant la coulisse de fermeture (2), le chanfrein (10) de la coulisse (2) appréhende par l'arrière en premier lieu la tête (14) du tourillon oscillant (13) sur lequel il exerce une poussée jusqu'à ce que la tête (14) remonte sur le chanfrein (9) de la mâchoire d'arrêt (1a).

2. Fermeture selon la revendication 1, caractérisée par le fait que sur le côté de l'ouverture de la mâchoire d'arrêt (1a) les chanfreins convergent l'un vers l'autre, de sorte qu'il se forme des pointes (15, 16).

# FIG. 1

# FIG. 2

# FIG. 3